# EUROPEAN PATENT APPLICATION

(11) **EP 4 835 681 A1**
(43) Date of publication of application: **04.11.2026**
(21) Application number: 26174978.2
(22) Date of filing: 28.04.2026
(51) Int. Cl.: G06F 15/173

(54) **COLLECTIVE-AWARE HANDLING OF AI MODEL TRAFFIC**

(30) Priority: 28.04.2025 US 202519192245
(71) Applicant: Mellanox Technologies, Ltd., 2069200 Yokneam (IL)
(72) Inventor: NORMATOV, Alexander, 2069200 Yokneam (IL); BILKOVSKII, Alexander, 2069200 Yokneam (IL); SHALOM, Gal, 2069200 Yokneam (IL); ZAHID, Feroz, 2069200 Yokneam (IL); TANTSURA, Evgeny, 2069200 Yokneam (IL); YEHEZKEL, Aviad, 2069200 Yokneam (IL); KAHALON, Omri, 2069200 Yokneam (IL); ROMANO, Yaakov, 2069200 Yokneam (IL)
(74) Representative: Mathys & Squire

(57) **Abstract**

Disclosed are systems and techniques for collective-aware handling of AI model traffic. The techniques include generating a first network packet having first metadata. The first metadata indicates a first association with a plurality of parallel processing units for performing distributed artificial intelligence (AI) operations. The techniques further include, after generating the first network packet, generating a second network packet having second metadata. The second metadata indicates a second association with the plurality of parallel processing units for performing the distributed AI operations. The techniques further include determining that the second network packet has a higher priority than the first network packet based on a comparison of the second metadata to the first metadata. The techniques further include providing the second network packet to a networking device before providing the first network packet.

## Description

### TECHNICAL FIELD

At least one embodiment pertains to distributed computing operations, and more specifically, to network communications between distributed processors.

### BACKGROUND

Massively parallel artificial intelligence (AI) models can break computations into smaller, not necessarily uniform, parts that execute in parallel. In some cases, the computations can be performed using a plurality of processors. In some cases, the processors are hosted by a plurality of systems. The plurality of processors can be connected to one another via one or more networks and can communicate with one another via the one or more networks.

Processes running on a first processor can be dependent on processes running on one or more other processors. The processors may transmit the inter-dependent data and/or results over the network using network packets. The coordinated communications and operations between processors are known as a "collective."

### SUMMARY

The invention is defined by the claims. In order to illustrate the invention, aspects and embodiments which may or may not fall within the scope of the claims are described herein.

Disclosed are systems and techniques for collective-aware handling of AI model traffic. The techniques include generating a first network packet having first metadata. The first metadata indicates a first association with a plurality of parallel processing units for performing distributed artificial intelligence (AI) operations. The techniques further include, after generating the first network packet, generating a second network packet having second metadata. The second metadata indicates a second association with the plurality of parallel processing units for performing the distributed AI operations. The techniques further include determining that the second network packet has a higher priority than the first network packet based on a comparison of the second metadata to the first metadata. The techniques further include providing the second network packet to a networking device before providing the first network packet.
Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

FIG. 1 is a block diagram of an example distributed artificial intelligence (AI) network for collective-aware handling of AI model traffic, according to at least one embodiment.
FIG. 2 is a block diagram of an example artificial intelligence (AI) system for collective-aware handling of AI model traffic, according to at least one embodiment.
FIG. 3 is a block diagram of an example artificial intelligence (AI) metadata-aware switch for collective-aware handling of AI model traffic, according to at least one embodiment.
FIG. 4A is an example sequence diagram of an artificial intelligence (AI) system providing rules to an AI metadata-aware switch, according to at least one embodiment.
FIG. 4B is an example sequence diagram of an artificial intelligence (AI) system responding to a query from an AI metadata-aware switch, according to at least one embodiment.
FIG. 5 is a flow diagram of an example method for collective-aware handling of AI model traffic, according to at least one embodiment.
FIG. 6 is a flow diagram of an example method for collective-aware handling of AI model traffic, according to at least one embodiment.
FIG. 7 illustrates a computer system, according to at least one embodiment.
FIG. 8 illustrates a computer system, according to at least one embodiment.
FIG. 9A is a block diagram of an example generative language model system suitable for use in implementing some embodiments of the present disclosure.
FIG. 9B is a block diagram of an example generative language model that includes a transformer encoder-decoder suitable for use in implementing some embodiments of the present disclosure.
FIG. 9C is a block diagram of an example generative language model that includes a decoder-only transformer architecture suitable for use in implementing some embodiments of the present disclosure.

### DETAILED DESCRIPTION

Massively parallel artificial intelligence (AI) models can break computations into smaller, not necessarily uniform, parts that execute in parallel. In some cases, the computations can be performed using a plurality of processors that can be hosted by a plurality of systems and be connected to one another via one or more networks.

Processes running on a first processor can be dependent on processes running on one or more other processors. The processors may transmit the inter-dependent data and/or results over the network using network packets. The coordinated communications and operations between processors are known as a "collective."

In many cases, the network packets transmitted between processors are treated equally. This can create times when time-critical communications between processors are slowed down by non-critical communications. For example, a particular process may need to wait and be idle until it receives (e.g., via the network) the data it depends on, resulting in wasted time and computational resources.

Aspects of the present disclosure address the above and other deficiencies by providing for collective-aware handling of AI model traffic. For example, a parallel processing unit kernel developer writing code for an artificial intelligence (AI) kernel may identify a particular region of the code as being "high priority." When the code is compiled and executed using a parallel processing unit, network packets created by the high priority region of code for transmission to other processors can be marked as high priority. In some embodiments, one or more headers of the network packets can be modified or headers can be added to mark the packets as high priority.

In some embodiments, network packets generated by different regions of the code can be marked to identify one or more properties of the data carried by the network packet. The mark can include one or more labels, flags, or identifiers included in the metadata of the network packet. The mark can indicate properties of the network packet and/or its data, such as a priority, a type of collective operation, a data type, and/or the like. For example, network packets generated by a first region of code can be marked with first metadata indicating the type of data transmitted by the first region of code, and network packets generated by a second region of code can be marked with second metadata indicating the type of data transmitted by the second region of code.

As network packets are being processed by network equipment (e.g., network interface controllers (NICs), routers, switches, etc.), those packets identified as high priority can be prioritized. For example, the high priority network packets can be processed in network queues before other network packets. The high priority network packets can also be routed based on their priority. In some cases, if particular routers or switches of the network become congested, non-high priority packets may be discarded or delayed to reduce congestion and allow the high priority packets to be transmitted. In some cases, if particular routers or switches of the network become congested, packets marked as belonging to low-volume collectives, may still be buffered and not discarded, to avoid retransmissions.

In some embodiments, when the kernel code is compiled and executed using a parallel processing unit, it may send or cause to be sent (e.g., by a process running on a device hosting the parallel processing unit) one or more control messages to connected network equipment to influence the routing of network packets based on their metadata. For example, the kernel code may be configured to send (or cause to be sent) a message comprising one or more rules (e.g., prioritization rules, routing rules, etc.) to one or more network switches. The rules may indicate how traffic should be handled (e.g., routed, prioritized, treated, etc.) based on the traffic's associated metadata. For example, the rules may indicate that packets with a first label included in their metadata should be given higher priority than packets with a second label included in their metadata.

In some embodiments, the kernel code, or another entity on its behalf, may be configured to respond to queries from connected network equipment regarding how particular traffic should be handled (e.g., routed, prioritized, treated, etc.). For example, during execution of the kernel code, one or more application programming interfaces (APIs) may be exposed by the host processor (e.g., the host processor in a system hosting a GPU that executes the kernel code). As network equipment receives network traffic from the host processor, it can query the API to determine how to handle (e.g., prioritize, route, treat, etc.) the traffic from the host processor. The answer to the query can include one or more rules indicating how traffic should be handled (e.g., routed, prioritized, treated, etc.) based on the traffic's associated metadata.

Thus, network packets generated for AI kernels can include information (e.g., metadata, headers, etc.) that indicates one or more properties of the data included in the network packet. As the network packets traverse the network of connected parallel processing units, the network packets can be handled based on their metadata. In some embodiments, host processors may provide control messages to network equipment (e.g., switches, smart NICs, etc.) to indicate how the AI traffic should be handled. In some embodiments, network equipment may be able to query host processors to determine how the traffic from the parallel processing unit(s) of the host should be handled.

In some embodiments, more than one method for handling traffic can be used. For example, as execution of an AI kernel begins, one or more control messages may be provided to network equipment to provide an initial or default set of rules for packet handling (e.g., prioritization, routing, buffering, etc.). Then, during execution of the AI kernel, if network equipment receives network packets with metadata that does not correspond to any of the rules stored in the network equipment, the network equipment may query the host processor to determine how to handle traffic with the new metadata.

Advantages of the disclosed embodiments over the existing technology include but are not limited to improved network routing of AI traffic, resulting in more efficient use of parallel processing unit computational resources.

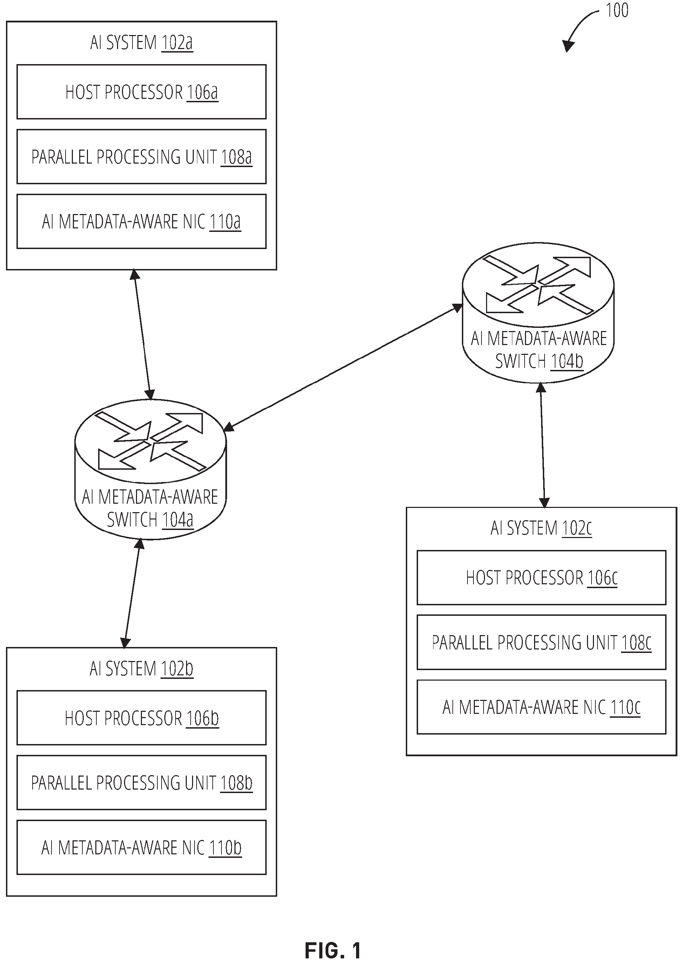

FIG. 1 is a block diagram of an example distributed artificial intelligence (AI) network 100 for collective-aware handling of AI model traffic, according to at least one embodiment. Distributed AI network 100 can include one or more AI systems, such as AI system 102a, AI system 102b, and AI system 102c, connected via one or more AI metadata-aware switches, such as AI metadata-aware switch 104a and AI metadata-aware switch 104b. In some embodiments, distributed AI network 100 can be part of a data center. In some embodiments, distributed AI network 100 can be part of a remote platform, such as a cloud-based platform.

Each AI system can include various components for executing AI workloads. For example, an AI system can include a host processor (e.g., a central processing unit (CPU)), such as host processor 106a, host processor 106b, or host processor 106c, a parallel processing unit (e.g., graphics processing unit (GPU)), such as parallel processing unit 108a, parallel processing unit 108b, or parallel processing unit 108c, and an AI metadata-aware network interface controller (NIC), such as AI metadata-aware NIC 110a, AI metadata-aware NIC 110b, or AI metadata-aware NIC 110c. In some embodiments, one or more AI systems of distributed AI network 100 can include one or more physical machines (e.g., one or more server computers, desktop computers, mobile devices, etc.), one or more virtual machines, and/or one or more containers executing on a host device.

The AI systems of distributed AI network 100 can coordinate to execute AI workloads. For example, AI computations can be broken into smaller, not necessarily uniform, parts that execute in parallel. The computations can be performed using the AI systems of distributed AI network 100. More specifically, the computations can be performed using the parallel processing units of the AI systems of distributed AI network 100.

Processes running on a first parallel processing unit (e.g., parallel processing unit 108a) can be dependent on processes running on one or more other processors (e.g., parallel processing unit 108b and/or parallel processing unit 108c). The parallel processing units can transmit the inter-dependent data and/or computation results over AI metadata-aware switch 104a and/or AI metadata-aware switch 104b using network packets. The coordinated communications and operations between processors may be known as a "collective."

The executed AI workload can include one or more AI kernels executing on the parallel processing units of distributed AI network 100. The AI kernels can be compiled for execution on the parallel processing units from source code. A kernel developer writing the source code may identify a particular region of the code as being "high priority." When the code is compiled and executed using a parallel processing unit, network packets created by the high priority region of code for transmission to other parallel processing units can be marked as high priority. In some embodiments, one or more headers of the network packets can be modified or headers can be added to mark the packets as high priority.

In some embodiments, network packets generated by different regions of the code can be marked to identify one or more properties of the data carried by the network packet. The mark can include one or more labels, flags, or identifiers included in the metadata of the network packet. The mark can indicate properties of the network packet and/or its data, such as a priority, a type of collective operation, a communication collective identifier, a data type, collective data volume indicator, and/or the like. In some embodiments, the type of collective operation can include at least one of a broadcast operation, an all-reduce operation, a reduce operation, an all-gather operation, a gather operation, a scatter operation, a reduce-scatter operation, or a barrier operation.

In some embodiments, the mark and/or the metadata can indicate an association with one or more parallel processing units of distributed AI network 100. For example, when multiple parallel processing units are included in a collective operation, the group of parallel processing units can be assigned a communication collective identifier. The communication collective identifier can be included in the network packet metadata to associate the network packet with the group of parallel processing units, and the network packet may be handled (e.g., routed, prioritized, treated, etc.) based on the communication collective identifier. In some embodiments, a network packet can have an associated target parallel processing unit. For example, a network packet can be generated by a first parallel processing unit of distributed AI network 100. The network packet may include data required by a second parallel processing unit of distributed AI network 100. The network packet from the first parallel processing unit may have the second parallel processing unit identified as the target parallel processing unit of the plurality of parallel processing units of distributed AI network 100.

Network packets generated by a first region of code can be marked with first metadata indicating the type of data transmitted by the first region of code, and network packets generated by a second region of code can be marked with second metadata indicating the type of data transmitted by the second region of code.

In some embodiments, the AI kernel executing on the parallel processing unit can send one or more signals to a connected NIC to cause the NIC to generate the network packets for the AI kernel. The signals can include the metadata that is to be included in the generated network packets. The signals can also include additional data for the generated network packets, such as the data or payload to include in the packet, the destination address for the packet, and/or the like. In some embodiments, the AI kernel can create the network packet and provide it to the NIC to be forwarded toward its destination.

As network packets are being processed by network equipment (e.g., NICs, such as AI metadata-aware NIC 110a, AI metadata-aware NIC 110b, and AI metadata-aware NIC 110c, routers, switches, such as AI metadata-aware switch 104a and AI metadata-aware switch 104b, etc.), those packets identified as high priority can be prioritized. For example, the high priority network packets can be processed in network queues before other network packets. The high priority network packets can also be routed based on their priority. In some embodiments, network packets may be treated differently based on their metadata. For example, if particular routers or switches of the network become congested, non-high priority packets may be discarded or delayed to reduce congestion and allow the high priority packets to be transmitted.

In some embodiments, if particular routers or switches of the network become congested, packets marked as belonging to low-volume collectives, may be buffered and not discarded, to avoid retransmissions. For example, some communication collectives (e.g., groups of associated distributed processors) may generate fewer network packets than other communication collectives. Network packets generated by the low-volume communication collectives may include a collective data volume indicator that indicates a number of network packets generated by the associated communication collective. In some embodiments, the collective data volume indicator is a value from a predetermined set of values (e.g., "low," "medium," "high," etc.). In some embodiments, the collective data volume indicator is a counter indicating the number of network packets that have been generated by the communication collective. In some embodiments, the collective data volume indicator is a value indicating a maximum number of network packets that may be generated by the communication collective.

If network packets are marked as belonging to low-volume collectives (e.g., if the collective data volume indicator indicates that a number of network packets generated by the communication collective is less than a first volume threshold), the router or switch may buffer the packets (since there are not very many) and continue to handle other packets.

In some embodiments, when the AI kernel source code is compiled and executed using a parallel processing unit, it may send or cause to be sent one or more control messages to connected network equipment to influence the handling (e.g., routing, buffering, etc.) of network packets based on their metadata. For example, the parallel processing unit (e.g., parallel processing unit 108a) may generate one or more control messages and provide them to a connected NIC (e.g., AI metadata-aware NIC 110a) to be forwarded toward a particular network equipment (e.g., AI metadata-aware switch 104a). In some cases, the parallel processing unit may provide one or more signals to a connected NIC to cause the NIC to generate the control messages and forward them toward the network equipment. In some cases, a process executing on a host processor of the AI system (e.g., host processor 106a of AI system 102a) may generate the control messages and provide them to a connected NIC (e.g., AI metadata-aware NIC 110a) to be forwarded toward the network equipment. In some cases, the process executing on the host processor of the AI system can provide one or more signals to the connected NIC to cause the NIC to generate the control messages and forward them toward the network equipment.

In some embodiments, the control messages may be sent directly to the network equipment. In some embodiments, the control messages may be provided to a central server. For example, the central server may have an application programming interface (API) configured to receive the control messages. The central server may perform one or more operations based on the control messages, such as aggregation, deduplication, and/or the like, before providing the control messages (or alternative control messages based on the first control messages) to the network equipment.

In some embodiments, the central server can be located in a data center. In some embodiments, the central server can be part of a remote platform, such as a cloud-based platform.

The control messages may include one or more rules (e.g., prioritization rules, routing rules, buffering rules, etc.) that indicate how traffic should be handled (e.g., routed, prioritized, treated, buffered, etc.) based on the traffic's associated metadata. For example, the rules may indicate that packets with a first label included in their metadata should be given higher priority than packets with a second label included in their metadata.

AI metadata-aware switch 104a and AI metadata-aware switch 104b can store one or more rules for handling AI traffic in distributed AI network 100. As network packets are received, the metadata associated with the packet can be determined. For example, one or more headers of the network packet can be identified to determine the metadata of the network packet. AI metadata-aware switch 104a and/or AI metadata-aware switch 104b can then handle the network packets based on the determined metadata. For example, AI metadata-aware switch 104a may include a rule that indicates that network packets with a first label in their metadata should be given high priority

In some embodiments, the AI kernel, or another entity on its behalf, such as a host processor of the AI system executing the AI kernel, may be configured to respond to queries from connected network equipment regarding how particular traffic should be handled. For example, during execution of the kernel code, one or more APIs may be exposed by the host processor of the AI system. As network equipment receives network traffic from the AI system, it can query the API to determine how to handle (e.g., prioritize, route, buffer, treat, etc.) the traffic from the AI system. The answer to the query can include one or more rules indicating how traffic should be handled based on the traffic's associated metadata.

In some embodiments, more than one method for handling traffic can be used. For example, as execution of an AI kernel begins, one or more control messages may be provided to network equipment to provide an initial or default set of rules for packet handling (e.g., prioritization, routing, buffering, etc.). Then, during execution of the AI kernel, if network equipment receives network packets with metadata that does not correspond to any of the rules stored in the network equipment, the network equipment may query an AI system to determine how to handle traffic with the new metadata.

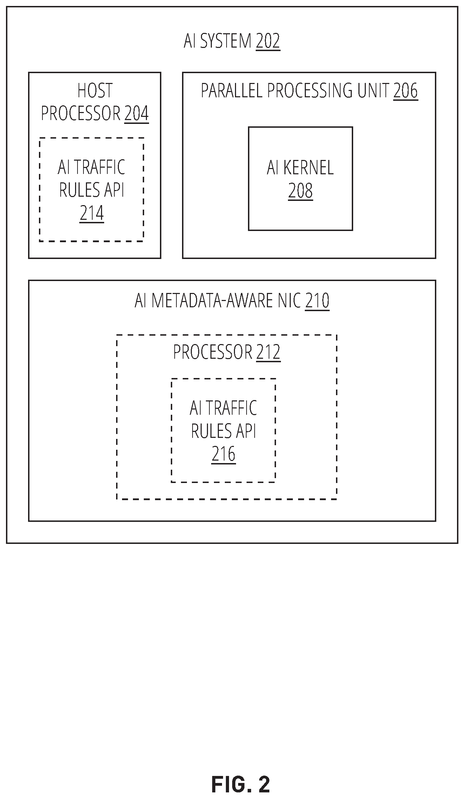

FIG. 2 is a block diagram of an example artificial intelligence (AI) system 202 for collective-aware handling of AI model traffic, according to at least one embodiment. AI system 202 can be included in a network of AI systems for performing distributed AI operations. AI system 202 can include host processor 204, parallel processing unit 206, and AI metadata-aware NIC 210. Host processor 204 can include one or more central processing units (CPUs), accelerators, physics processing units (PPUs), data processing units (DPUs), and/or other processing circuitry. Parallel processing unit 206 can include one or more graphics processing units (GPUs). In some embodiments, AI system 202 can include memory (not shown), such as read-only memory (ROM), flash memory, dynamic random access memory (DRAM), such as synchronous DRAM (SDRAM), double data rate (DDR SDRAM), or DRAM (RDRAM), and/or the like.

Host processor 204 can execute one or more processes for coordinating the distributed AI operations. For example, in some embodiments, host processor 204 can execute AI traffic rules API 214 to respond to queries from network equipment (e.g., routers, switches, etc.) asking how particular AI traffic should be handled (e.g., routed, prioritized, buffered, treated, etc.).

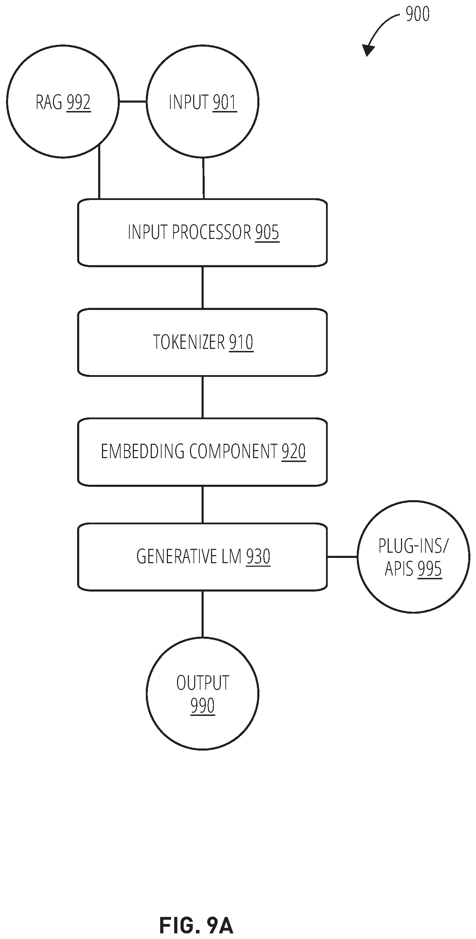

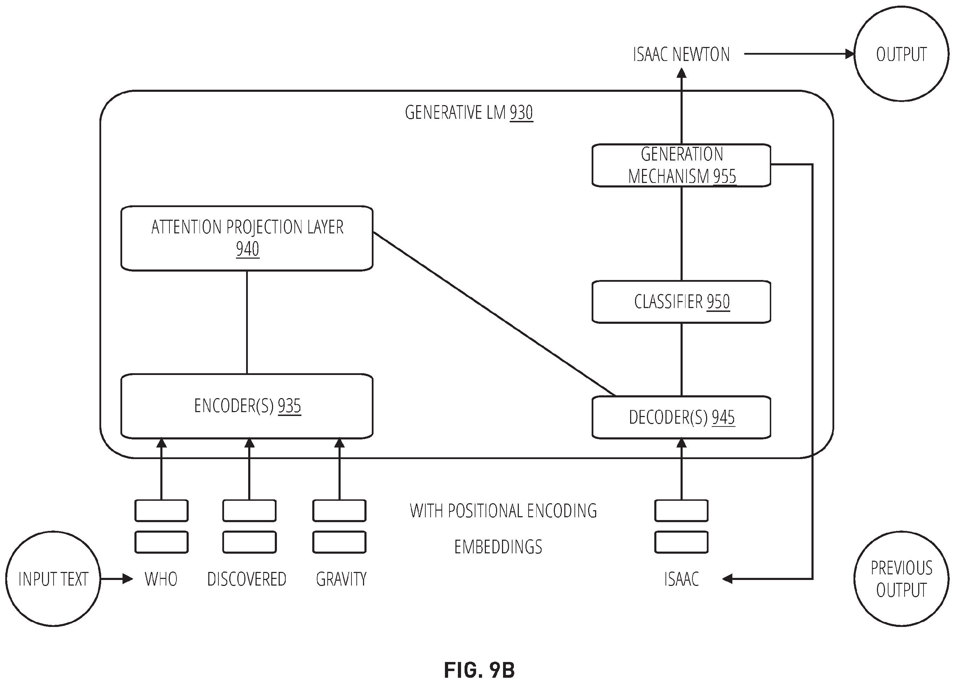

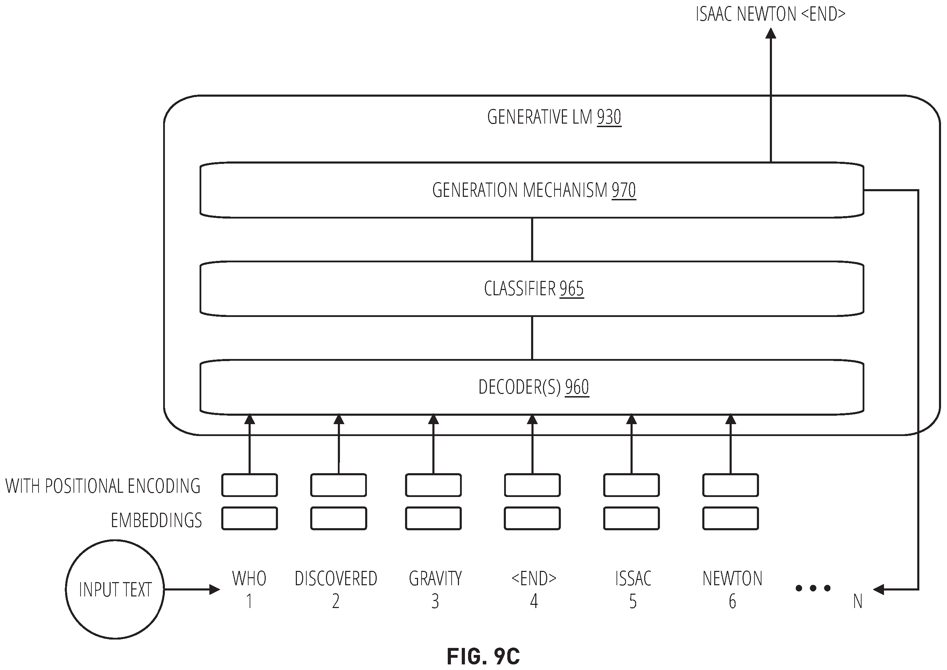

Parallel processing unit 206 can include one or more processors for parallel execution, such as a graphics processing unit (GPU). Parallel processing unit 206 can execute AI kernel 208, which can include one or more distributed AI operations. In some embodiments, AI kernel 208 includes one or more AI models and/or machine learning models. In some embodiments, AI kernel 208 is configured to train an AI model, such as a large language model (LLM), a vision model, a vision language model, and/or the like. In some embodiments, AI kernel 208 is configured to perform inference on a trained AI model. In some embodiments, AI kernel 208 is configured to execute one or more models described in relation to FIG. 9A, FIG. 9B, and/or FIG. 9C.

To execute the distributed AI operations, AI kernel 208 can generate (or cause AI metadata-aware NIC 210 to generate) one or more network packets with metadata related to AI kernel 208. For example, the network packets can include one or more modified headers or one or more additional headers that can include information related to the AI operation being executed or related to the data included in the network packet. For example, the metadata can include one or more labels, flags, or identifiers, and can indicate properties of the network packet and/or its data, such as a priority, a type of collective operation, a communication collective identifier, a data type, collective data volume indicator, and/or the like. In some embodiments, parallel processing unit 206 can simultaneously execute multiple AI kernels, each of which can generate their own AI network traffic.

AI metadata-aware NIC 210 can include a network interface controller (NIC) configured to handle traffic based on AI metadata included in the network packets. For example, AI metadata-aware NIC 210 can include one or more queues or buffers for network packets. As network packets are generated, they can be stored in a queue or buffer before they are transmitted over the network. Based on the AI metadata included in the network packets, some network packets may be removed from the queue or buffer and transmitted before other network packets. For example, network packets with metadata that indicates a high priority may be transmitted before network packets with metadata that does not indicate a high priority.

In some embodiments, AI metadata-aware NIC 210 can be a "smart NIC" which may include processor 212 for performing one or more operations separate from host processor 204. In some embodiments, processor 212 is a data processing unit (DPU). In some embodiments, processor 212 can execute AI traffic rules API 216 to respond to queries from network equipment (e.g., routers, switches, etc.) asking how particular AI traffic should be handled (e.g., routed, prioritized, buffered, etc.).

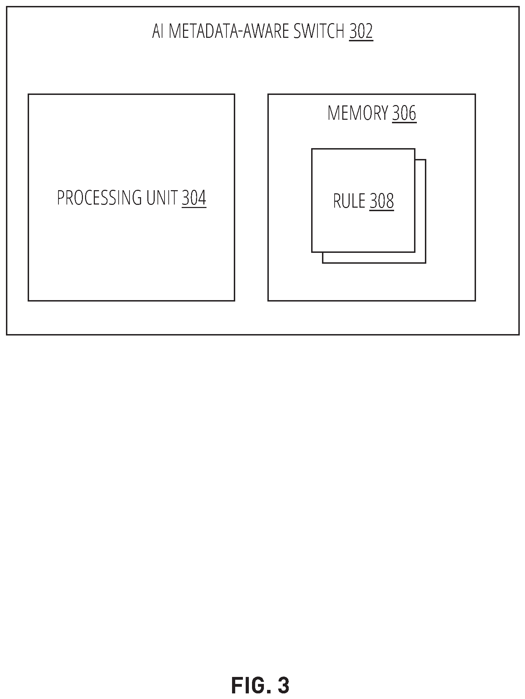

FIG. 3 is a block diagram of an example artificial intelligence (AI) metadata-aware switch 302 for collective-aware handling of AI model traffic, according to at least one embodiment. AI metadata-aware switch 302 can receive AI model traffic in a distributed AI network and can handle the traffic based on metadata included in the network packets.

AI metadata-aware switch 302 can include processing unit 304 and memory 306. Processing unit 304 can include one or more central processing units (CPUs), graphics processing units (GPUs), accelerators, physics processing units (PPUs), data processing units (DPUs), application specific integrated circuits (ASICs), etc. Memory 306 can include read-only memory (ROM), flash memory, dynamic random access memory (DRAM), such as synchronous DRAM (SDRAM), double data rate (DDR SDRAM), or DRAM (RDRAM), and/or the like.

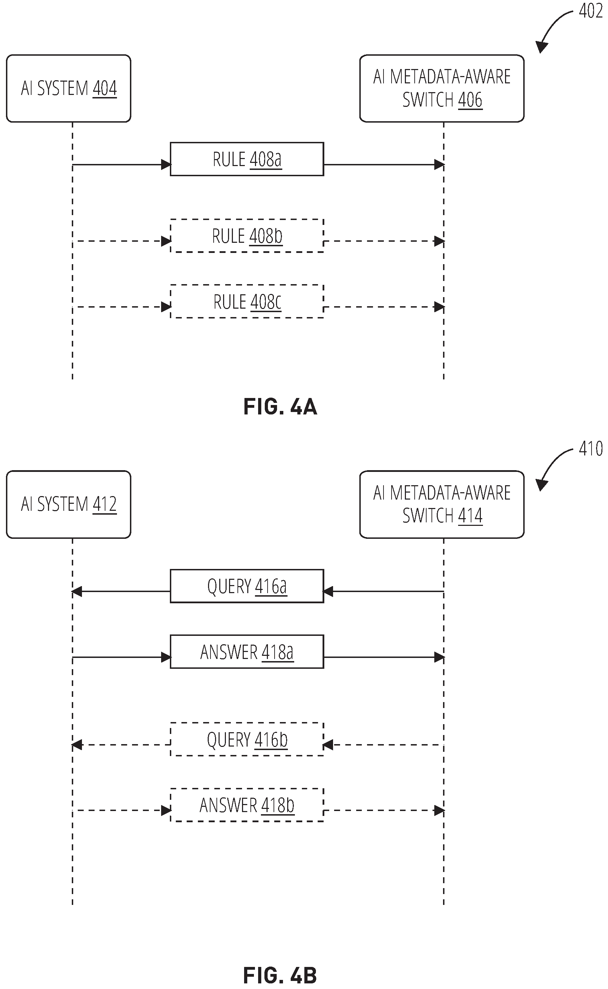

Processing unit 304 may be configured to receive and execute AI traffic handling rules. In some embodiments, the rules are received from a connected AI system, as depicted in FIG. 4A. In some embodiments, processing unit 304 can generate a query to ask a connected AI system how to handle particular network traffic. AI metadata-aware switch 302 can receive an answer in response to the query, and the answer can include one or more rules.

Memory 306 can include one or more rules 308 that indicate how AI network traffic should be handled. A rule may include one or more metadata values that are used to match network packets to the rule and may include one or more actions or operations to be performed for the matching network packets. In some embodiments, the rules may indicate a priority of each network packet. In some embodiments, the rules may indicate a route that a particular subset of the AI network traffic should use.

FIG. 4A is an example sequence diagram 402 of an artificial intelligence (AI) system providing rules to an AI metadata-aware switch, according to at least one embodiment. AI system 404 and AI metadata-aware switch 406 can be included in a distributed AI network, such as distributed AI network 100 of FIG. 1. AI system 404 may generate one or more network packets during execution of an AI kernel. The network packets may be marked with metadata related to the operations being performed. For example, some network packets may include a communication collective identifier or a collective operation type. AI metadata-aware switch 406 may be configured to handle the network packets based on their metadata.

In some embodiments, AI system 404 may provide one or more rules to AI metadata-aware switch 406 to indicate how the AI network traffic should be handled. For example, AI system 404 may provide rule 408a to AI metadata-aware switch 406. Rule 408a can include one or more rules for handling (e.g., routing, prioritizing, buffering, treating, etc.) AI network traffic. A rule may include one or more metadata values that are used to match network packets to the rule and may include one or more actions or operations to be performed for the matching network packets. In some embodiments, the rules may indicate a priority of each network packet. In some embodiments, the rules may indicate a route that a particular subset of the AI network traffic should use.

In some embodiments, rule 408a can include all the rules for network traffic from AI system 404. In some embodiments, AI system 404 sends a first set of rules in rule 408a and later sends one or more sets of rules in rule 408b and/or rule 408c. In some cases, rule 408a may include a first rule for a first metadata label, and rule 408b may include a second rule for the first metadata label, the second rule overriding the first rule.

In some embodiments, rule 408a is generated by a parallel processing unit of AI system 404. In some embodiments, rule 408a is generated by a host processor of AI system 404. In some embodiments, rule 408a is generated by a NIC of AI system 404.

FIG. 4B is an example sequence diagram 410 of an artificial intelligence (AI) system responding to a query from an AI metadata-aware switch, according to at least one embodiment. AI system 412 and AI metadata-aware switch 414 can be included in a distributed AI network, such as distributed AI network 100 of FIG. 1. AI system 412 may generate one or more network packets during execution of an AI kernel. The network packets may be marked with metadata related to the operations being performed. For example, some network packets may include a communication collective identifier or a collective operation type. AI metadata-aware switch 414 may be configured to handle the network packets based on their metadata.

If AI metadata-aware switch 414 receives AI network traffic with metadata that does not match any of the rules stored at AI metadata-aware switch 414, AI metadata-aware switch 414 may send query 416a to AI system 412. Query 416a can include a request for one or more rules that match specific metadata values. AI system 412 can respond to query 416a with answer 418a, which may include one or more rules for handling AI network traffic. For example, answer 418a can include one or more rules that match the metadata values included in query 416a. After receiving answer 418a, AI metadata-aware switch 414 can handle the network traffic based on the rules included in answer 418a.

In some embodiments, AI metadata-aware switch 414 may receive, at a second time, second network traffic with metadata that does not match any of the rules stored at AI metadata-aware switch 414. AI metadata-aware switch 414 can send query 416b to AI system 412 and may receive answer 418b with one or more rules that match the metadata values included in query 416b. In some embodiments, an answer (e.g., answer 418a, answer 418b, etc.) can include more than one rule. In some embodiments, an answer can include one or more rules that do not match the metadata values included in the corresponding query. For example, AI metadata-aware switch 414 may query AI system 412 regarding a first metadata label, and AI system 412 may respond with a first rule for metadata with the first metadata label and a second rule for metadata with a second metadata label.

In some embodiments, answer 418a is generated by a parallel processing unit of AI system 412. In some embodiments, answer 418a is generated by a host processor of AI system 412. For example, a host processor of AI system 412 may provide an API for receiving AI traffic queries. In some embodiments, answer 418a is generated by a NIC of AI system 412. For example, a NIC (e.g., a smart NIC, a DPU, etc.) of AI system 412 may provide an API for receiving AI traffic queries.

In some embodiments, AI metadata-aware switch 414 can query a separate entity, which can respond to queries on behalf of AI system 412. For example, a central server may be configured to receive and respond to queries on behalf of multiple AI kernels that are executing across one or more parallel processing units.

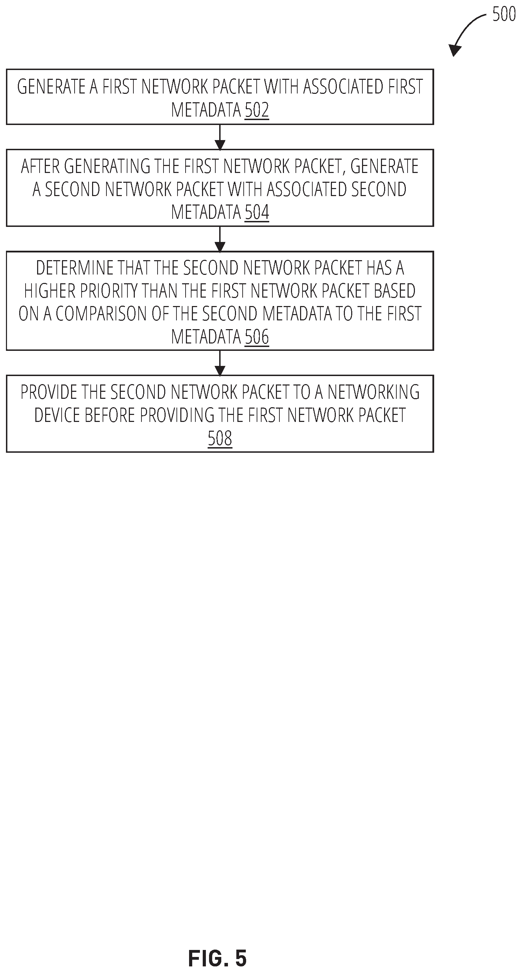

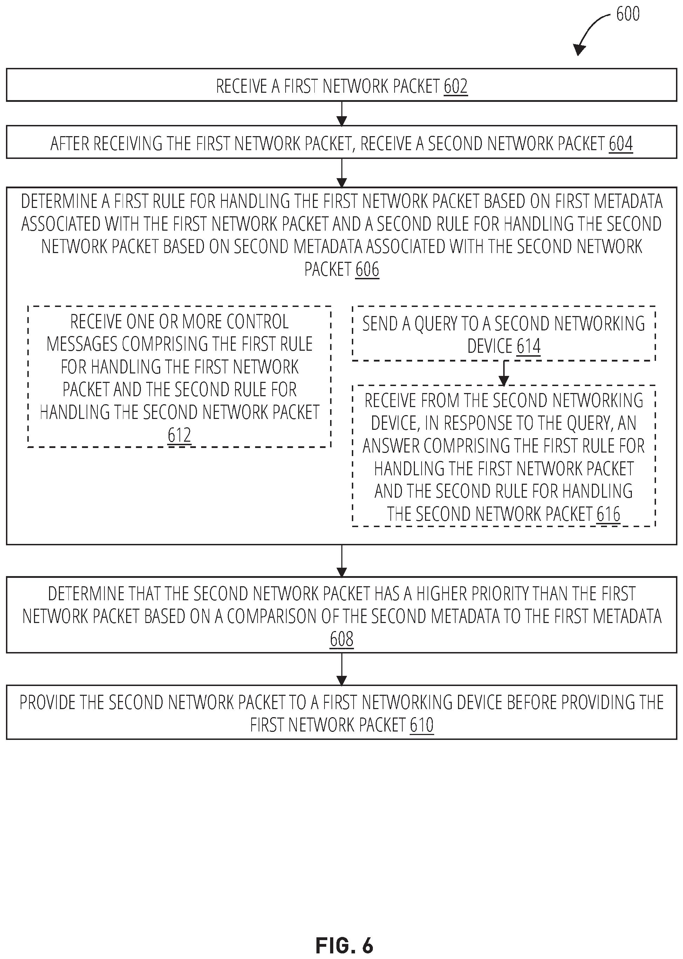

FIG. 5 is a flow diagram of an example method 500 for collective-aware handling of AI model traffic, according to at least one embodiment. FIG. 6 is a flow diagram of an example method 600 for collective-aware handling of AI model traffic, according to at least one embodiment.

Method 500 and/or method 600 can be performed using one or more processing units (e.g., CPUs, GPUs, accelerators, physics processing units (PPUs), data processing units (DPUs), etc.), which may include (or communicate with) one or more memory devices. In at least one embodiment, method 500 and/or method 600 can be performed using a processing device or processing devices. In at least one embodiment, method 500 and/or method 600 can be performed using one or more hardware circuits. In some embodiments, the hardware circuits may interact with one or more software processes. In at least one embodiment, method 500 can be performed using processing units of AI metadata-aware NIC 110a of FIG. 1. In at least one embodiment, method 600 can be performed by AI metadata-aware switch 104a of FIG. 1. In at least one embodiment, processing units performing any of method 500 and/or method 600 can be executing instructions stored on a non-transient computer readable storage media. In at least one embodiment, any of method 500 and/or method 600 can be performed using multiple processing threads (e.g., CPU threads and/or GPU threads), individual threads executing one or more individual functions, routines, subroutines, or operations of the method. In at least one embodiment, processing threads implementing any of method 500 and/or method 600 can be synchronized (e.g., using semaphores, critical sections, and/or other thread synchronization mechanisms). Alternatively, processing threads implementing any of method 500 and/or method 600 can be executed asynchronously with respect to each other. Various operations of method 500 and/or method 600 can be performed in a different order compared with the order shown in FIG. 5 and/or FIG. 6. Some operations of any of method 500 and/or method 600 can be performed concurrently with other operations. In at least one embodiment, one or more operations shown in FIG. 5 and/or FIG. 6 may not always be performed.

Referring now to FIG. 5, at block 502, processing units executing method 500 can generate a first network packet having first metadata. The first metadata can be determined based on the code that is used to create the first network packet and/or based on the data included in the first network packet. The first metadata can indicate a first association with a plurality of parallel processing units for performing distributed artificial intelligence (AI) operations. In some embodiments, the first association includes one or more target parallel processing units of the plurality of parallel processing units. In some embodiments, the distributed AI operations include one or more of broadcast operations, all-reduce operations, reduce operations, all-gather operations, gather operations, scatter operations, reduce-scatter operations, or barrier operations.

In some embodiments, the first network packet with the associated first metadata is generated for an AI kernel executed using a first parallel processing unit of the plurality of parallel processing units. In some embodiments, the first network packet is generated by the first parallel processing unit. In some embodiments, the first network packet is generated by a host processor associated with the first parallel processing unit. In some embodiments, the first network packet is generated by a NIC associated with the first parallel processing unit.

In some embodiments, the first metadata includes at least one of a first communication collective identifier, a data type, or an operation type. In some embodiments, the operation type is a collective operation type.

At block 504, processing units can, after generating the first network packet, generate a second network packet having second metadata. The second metadata can be determined based on the code that is used to create the second network packet and/or based on the data included in the second network packet. In some embodiments, the first metadata includes a first communication collective identifier, and the second metadata include a second communication collective identifier that is different than the first communication collective identifier.

At block 506, processing units can determine that the second network packet has a higher priority than the first network packet based on a comparison of the second metadata with the first metadata (e.g., one or more rules may indicate that network packets with metadata included in the second metadata should be given priority over network packets with metadata included in the first metadata, the second metadata may include a priority value higher than a priority value in the first metadata, etc.). At block 508, processing units can provide the second network packet to a networking device before providing the first network packet. In some embodiments, the networking device is a network switch configured to handle network traffic based on AI-related metadata.

Referring now to FIG. 6, at block 602, processing units executing method 600 can receive a first network packet. At block 604, processing units can, after receiving the first network packet, receive a second network packet. At block 606, processing units can determine a first rule for handling the first network packet based on first metadata associated with the first network packet and a second rule for handling the second network packet based on second metadata associated with the second network packet. In some embodiments, the rules can be determined as discussed below in conjunction with block 612. In some embodiments, the rules can be determined using information received from a second networking device as discussed below in conjunction with blocks 614 and 616.

The first metadata can indicate a first association with a plurality of parallel processing units for performing distributed artificial intelligence (AI) operations. The second metadata can indicate a second association with the plurality of parallel processing units for performing the distributed AI operations.

In some embodiments, the first metadata includes at least one of a first communication collective identifier, a data type, or an operation type. In some embodiments, the operation type is a collective operation type.

In some embodiments, at block 612, to determine the first rule for handling the first network packet and the second rule for handling the second network packet, processing units can receive one or more control messages comprising the first rule for handling the first network packet and the second rule for handling the second network packet. In some embodiments, the one or more control messages are generated for an AI kernel executed using a first parallel processing unit of the plurality of parallel processing units.

In some embodiments, at block 614, to determine the first rule for handling the first network packet and the second rule for handling the second network packet, processing units can send a query to a second network device. At block 616, processing units can receive from the second networking device, in response to the query, an answer comprising the first rule for handling the first network packet and the second rule for handling the second network packet. In some embodiments, the answer is generated for an AI kernel executed by a first parallel processing unit of the plurality of parallel processing units.

In some embodiments, the first rule for handling the first network packet based on the first metadata associated with the first network packet includes at least one of a prioritization rule for the first network packet, a buffering decision for the first network packet, or a network routing rule for the first network packet.

At block 608, processing units can determine that the second network packet has a higher priority than the first network packet based on a comparison of the second metadata to the first metadata. At block 610, processing units can provide the second network packet to a first networking device before providing the first network packet.

### COMPUTER ARCHITECTURE

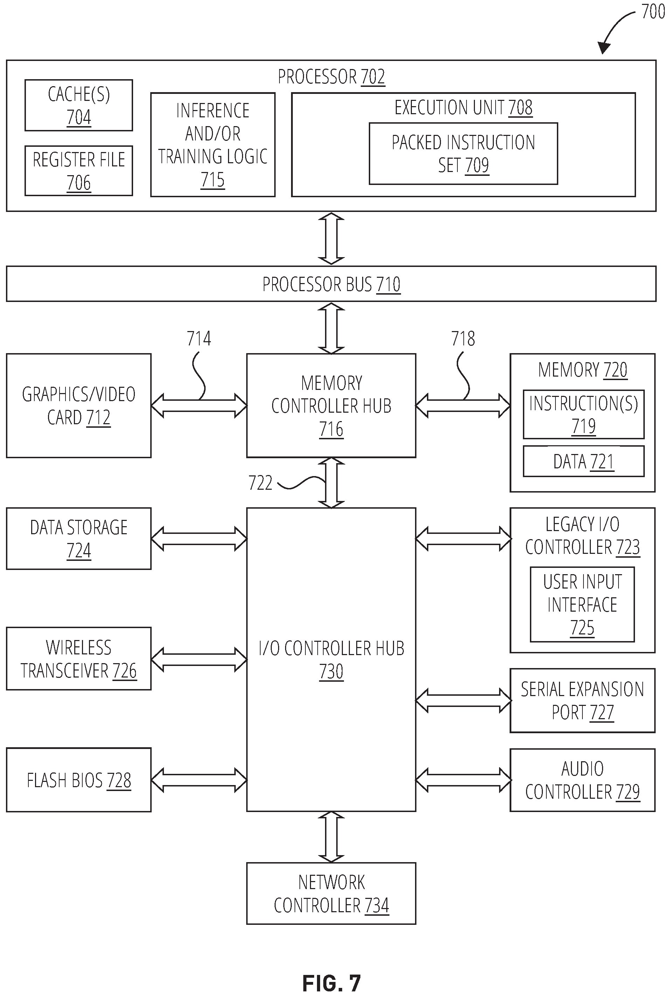

FIG. 7 is a block diagram illustrating an exemplary computer system 700, which may be a system with interconnected devices and components, a system-on-a-chip (SOC) or some combination thereof formed with a processor that may include execution units to execute an instruction, according to at least one embodiment. In at least one embodiment, computer system 700 may include, without limitation, a component, such as a processor 702 to employ execution units including logic to perform algorithms for process data, in accordance with present disclosure, such as in embodiment described herein. In at least one embodiment, computer system 700 may include processors, such as PENTIUM^{®} Processor family, XeonTM, Itanium^{®}, XScaleTM and/or StrongARMTM, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 700 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, edge devices, Internet-of- Things ("IoT") devices, or any other system that may perform one or more instructions in accordance with at least one embodiment.

In at least one embodiment, computer system 700 may include, without limitation, processor 702 that may include, without limitation, one or more execution units 708 to perform machine learning model training and/or inferencing according to techniques described herein. In at least one embodiment, computer system 700 is a single processor desktop or server system, but in another embodiment, computer system 700 may be a multiprocessor system. In at least one embodiment, processor 702 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 702 may be coupled to a processor bus 710 that may transmit data signals between processor 702 and other components in computer system 700.

In at least one embodiment, processor 702 may include, without limitation, a Level 1 ("L1") internal cache memory ("cache") 704. In at least one embodiment, processor 702 may have a single internal cache or multiple levels of internal cache. In at least one embodiment, cache memory may reside external to processor 702. Other embodiments may also include a combination of both internal and external caches depending on particular implementation and needs.

In at least one embodiment, processor 702 may include, without limitation, a Level 2 ("L2") internal cache memory ("cache") 704. The L2 cache can serve as a secondary, larger, and somewhat slower cache compared to the L1 cache that is still faster than accessing the main memory (e.g., via the memory controller hub 716). Thus, the L2 cache can enhance performance by reducing the time the processor spends accessing the main memory. In at least one embodiment, processor 702 may have a single internal L2 cache or multiple levels of internal cache. In embodiments where the processor 702 is a multi-core processor, the L2 cache can be shared among multiple cores of processor 702, providing a larger, intermediate level of cache memory for more than one processing core. In at least one embodiment, L2 cache memory may reside external to processor 702.

In at least one embodiment, processor 702 may include, without limitation, a Level 3 ("L3") internal cache memory ("cache") 704. The L3 cache can serve as a tertiary, larger, and slower cache compared to both the L1 and L2 caches. The L3 cache can enhance performance by reducing the time the processor spends accessing the main memory. The L3 cache can be shared among multiple cores of processor 702, providing a larger pool of fast-access memory for data for the processor cores. In at least one embodiment, processor 702 may have a single internal L3 cache or multiple levels of internal cache. In at least one embodiment, L3 cache memory may reside external to processor 702. Other embodiments may also include any combination of internal or external L1, L2, and/or L3 caches depending on particular implementation and needs. In at least one embodiment, register file 706 may store different types of data in various registers including, without limitation, integer registers, floating point registers, status registers, and instruction pointer register.

In at least one embodiment, execution unit 708, including, without limitation, logic to perform integer and floating point operations, also resides in processor 702. In at least one embodiment, processor 702 may also include a microcode ("ucode") read only memory ("ROM") that stores microcode for certain macro instructions. In at least one embodiment, execution unit 708 may include logic to handle a packed instruction set 709. In at least one embodiment, by including packed instruction set 709 in an instruction set of a general-purpose processor 702, along with associated circuitry to execute instructions, operations used by many multimedia applications may be performed using packed data in a general-purpose processor 702. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 708 may also be used in microcontrollers, embedded processors, graphics devices, DSPs, and other types of logic circuits. In at least one embodiment, computer system 700 may include, without limitation, a memory 720. In at least one embodiment, memory 720 may be implemented as a Dynamic Random Access Memory ("DRAM") device, a Static Random Access Memory ("SRAM") device, flash memory device, or other memory device. In at least one embodiment, memory 720 may store instruction(s) 719 and/or data 721 represented by data signals that may be executed by processor 702.

In at least one embodiment, system logic chip may be coupled to processor bus 710 and memory 720. In at least one embodiment, system logic chip may include, without limitation, a memory controller hub ("MCH") 716, and processor 702 may communicate with MCH 716 via processor bus 710. In at least one embodiment, MCH 716 may provide a high bandwidth memory path 718 to memory 720 for instruction and data storage and for storage of graphics commands, data and textures. In at least one embodiment, MCH 716 may direct data signals between processor 702, memory 720, and other components in computer system 700 and to bridge data signals between processor bus 710, memory 720, and a system I/O 722. In at least one embodiment, system logic chip may provide a graphics port for coupling to a graphics controller. In at least one embodiment, MCH 716 may be coupled to memory 720 through a high bandwidth memory path 718 and graphics/video card 712 may be coupled to MCH 716 through an Accelerated Graphics Port ("AGP") interconnect 714.

In at least one embodiment, computer system 700 may use system I/O 722 that is a proprietary hub interface bus to couple MCH 716 to I/O controller hub ("ICH") 730. In at least one embodiment, ICH 730 may provide direct connections to some I/O devices via a local I/O bus. In at least one embodiment, local I/O bus may include, without limitation, a high-speed I/O bus for connecting peripherals to memory 720, chipset, and processor 702. Examples may include, without limitation, an audio controller 729, a firmware hub ("flash BIOS") 728, a wireless transceiver 726, a data storage 724, a legacy I/O controller 723 containing user input and keyboard interfaces 725, a serial expansion port 727, such as Universal Serial Bus ("USB"), and a network controller 734, which may include in some embodiments, a data processing unit. Data storage 724 may comprise a hard disk drive, a floppy disk drive, a CD-ROM device, a flash memory device, or other mass storage device.

In at least one embodiment, FIG. 7 illustrates a system, which includes interconnected hardware devices or "chips", whereas in other embodiments, FIG. 7 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 700 are interconnected using compute express link (CXL) interconnects.

Inference and/or training logic 715 are used to perform inferencing and/or training operations associated with one or more embodiments. In at least one embodiment, inference and/or training logic 715 may be used in system FIG. 7 for inferencing or predicting operations based, at least in part, on weight parameters calculated using neural network training operations, neural network functions and/or architectures, or neural network use cases described herein.

Such components may be used to generate synthetic data imitating failure cases in a network training process, which may help to improve performance of the network while limiting the amount of synthetic data to avoid overfitting.

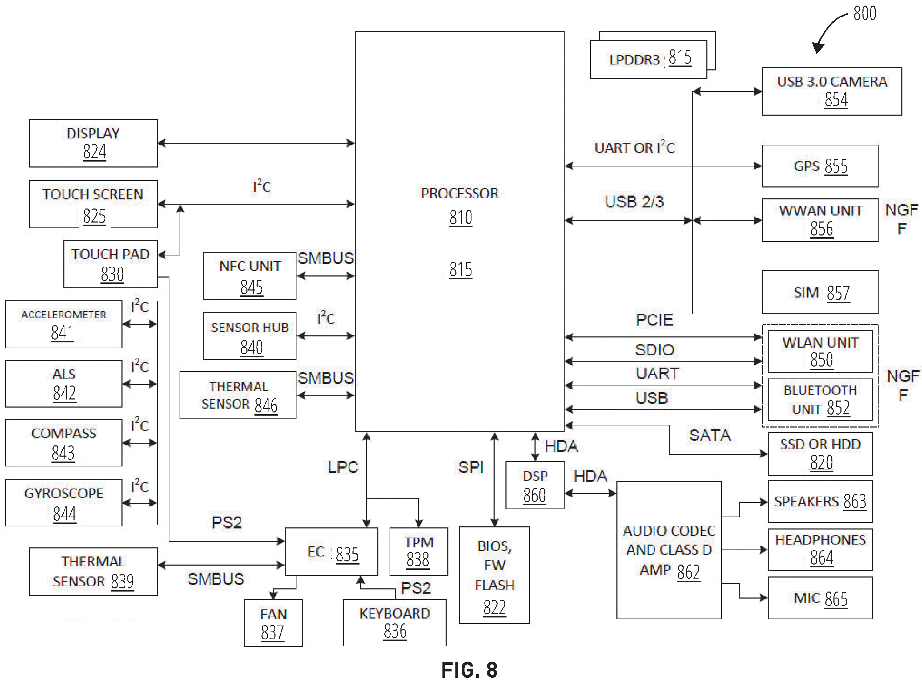

FIG. 8 is a block diagram illustrating an electronic device 800 for utilizing a processor 810, according to at least one embodiment. In at least one embodiment, electronic device 800 may be, for example and without limitation, a notebook, a tower server, a rack server, a blade server, a laptop, a desktop, a tablet, a mobile device, a phone, an embedded computer, an edge device, an IoT device, or any other suitable electronic device.

In at least one embodiment, electronic device 800 may include, without limitation, processor 810 communicatively coupled to any suitable number or kind of components, peripherals, modules, or devices. In at least one embodiment, processor 810 coupled using a bus or interface, such as a I2C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 8 illustrates a system, which includes interconnected hardware devices or "chips", whereas in other embodiments, FIG. 8 may illustrate an exemplary System on a Chip ("SoC"). In at least one embodiment, devices illustrated in FIG. 8 may be interconnected with proprietary interconnects, standardized interconnects (e.g., PCIe) or some combination thereof. In at least one embodiment, one or more components of FIG. 8 are interconnected using compute express link (CXL) interconnects.

In at least one embodiment, FIG. 8 may include a display 824, a touch screen 825, a touch pad 830, a Near Field Communications unit ("NFC") 845, a sensor hub 840, a thermal sensor 846, an Express Chipset ("EC") 835, a Trusted Platform Module ("TPM") 838, BIOS/firmware/flash memory ("BIOS, FW Flash") 822, a DSP 860, a drive 820 such as a Solid State Disk ("SSD") or a Hard Disk Drive ("HDD"), a wireless local area network unit ("WLAN") 850, a Bluetooth unit 852, a Wireless Wide Area Network unit ("WWAN") 856, a Global Positioning System (GPS) 855, a camera ("USB 3.0 camera") 854 such as a USB 3.0 camera, and/or a Low Power Double Data Rate ("LPDDR") memory unit ("LPDDR3") 815 implemented in, for example, LPDDR3 standard. These components may each be implemented in any suitable manner.

In at least one embodiment, other components may be communicatively coupled to processor 810 through components discussed above. In at least one embodiment, an accelerometer 841, Ambient Light Sensor ("ALS") 842, compass 843, and a gyroscope 844 may be communicatively coupled to sensor hub 840. In at least one embodiment, thermal sensor 839, a fan 837, a keyboard 836, and a touch pad 830 may be communicatively coupled to EC 835. In at least one embodiment, speaker 863, headphones 864, and microphone ("mic") 865 may be communicatively coupled to an audio unit ("audio codec and class d amp") 862, which may in turn be communicatively coupled to DSP 860. In at least one embodiment, audio unit 862 may include, for example and without limitation, an audio coder/decoder ("codec") and a class D amplifier. In at least one embodiment, SIM card ("SIM") 857 may be communicatively coupled to WWAN unit 856. In at least one embodiment, components such as WLAN unit 850 and Bluetooth unit 852, as well as WWAN unit 856 may be implemented in a Next Generation Form Factor ("NGFF").

In at least some embodiments, language models, such as large language models (LLMs) and/or other types of generative artificial intelligence (AI) may be implemented. These models may be capable of understanding, summarizing, translating, and/or otherwise generating text (e.g., natural language text, code, etc.), images, video, computer aided design (CAD) assets, omniverse and/or metaverse file information (e.g., in USD format), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/VLMs/etc. may be implemented for summarizing textual data, analyzing and extracting insights from data (e.g., textual, image, video, etc.), and generating new text/image/video/etc. in user-specified styles, tones, and/or formats. The LLMs of the present disclosure may be used exclusively for text processing, in embodiments, whereas in other embodiments, multimodal LLMs may be implemented to accept, understand, and/or generate text along with other types of content like images, audio, and/or video. For example, vision language models (VLMs), or more generally multimodal language models, may be implemented to accept image, video, audio, textual, 3D design (e.g., CAD), and/or other inputs data types and/or to generate or output image, video, audio, textual, 3D design, and/or other output data types.

Various types of LLM/VLM/etc. architectures may be implemented in various embodiments. For example, different architectures may be implemented that use different techniques for understanding and generating outputs - such as text, audio, video, image, etc. In some embodiments, LLM architectures such as recurrent neural networks (RNNs) or long short-term memory networks (LSTMs) may be used, while in other embodiments transformer architectures - such as those that rely on self-attention mechanisms - may be used to understand and recognize relationships between words or tokens. One or more generative processing pipelines that include LLMs may also include one or more diffusion block(s) (e.g., denoisers). The language models of the present disclosure may include encoder and/or decoder block(s). For example, discriminative or encoder-only LLMs like BERT (Bidirectional Encoder Representations from Transformers) may be implemented for tasks that involve language comprehension such as classification, sentiment analysis, question answering, and named entity recognition. As another example, generative or decoder-only LLMs like GPT (Generative Pretrained Transformer) may be implemented for tasks that involve language and content generation such as text completion, story generation, and dialogue generation. LLMs that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the model(s).

In various embodiments, the LLMs/VLMs/etc. may be trained using unsupervised learning, in which an LLM learns patterns from large amounts of unlabeled text/audio/video/image/etc. data. Due to the extensive training, in embodiments, the models may not require task-specific or domain-specific training. LLMs that have undergone extensive pre-training on vast amounts of unlabeled text data may be referred to as foundation models and may be adept at a variety of tasks like question-answering, summarization, filling in missing information, and translation. Some LLMs may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/VLMs/etc. of the present disclosure may be implemented using various model alignment techniques. For example, in some embodiments, guardrails may be implemented to identify improper or undesired inputs (e.g., prompts) and/or outputs of the models. In some non-limiting embodiments, the guardrails implemented may be similar to those described in U.S. Pat. App. No. 18,304,341, filed on April 20, 2023, the contents of which are hereby incorporated by reference in their entirety. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/implementation. As a result, the LLMs/VLMs/etc. of the present disclosure may be less likely to output language/text/audio/etc. that may be offensive, vulgar, improper, unsafe, out of domain, and/or otherwise undesired for the particular application/implementation.

In some embodiments, the LLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3^{rd} party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s) and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

In some embodiments, multiple language models (e.g., LLMs/VLMs/etc., multiple instances of the same language model, and/or multiple prompts provided to the same language model or instance of the same language model may be implemented, executed, or accessed (e.g., using one or more plug-ins, user interfaces, APIs, databases, data stores, repositories, etc.) to provide output responsive to the same query, or responsive to separate portions of a query. In at least one embodiment, multiple language models e.g., language models with different architectures, language models trained on different (e.g. updated) corpuses of data may be provided with the same input query and prompt (e.g., set of constraints, conditioners, etc.). In one or more embodiments, the language models may be different versions of the same foundation model. In one or more embodiments, at least one language model may be instantiated as multiple agents - e.g., more than one prompt may be provided to constrain, direct, or otherwise influence a style, a content, or a character, etc., of the output provided. In one or more example, non-limiting embodiments, the same language model may be asked to provide output corresponding to a different role, perspective, character, or having a different base of knowledge, etc. - as defined by a supplied prompt.

In any one of such embodiments, the output of two or more (e.g., each) language models, two or more versions of at least one language model, two or more instanced agents of at least one language model, and/or two more prompts provided to at least one language model may be further processed, e.g., aggregated, compared or filtered against, or used to determine (and provide) a consensus response. In one or more embodiments, the output from one language model - or version, instance, or agent - maybe be provided as input to another language model for further processing and/or validation. In one or more embodiments, a language model may be asked to generate or otherwise obtain an output with respect to an input source material, with the output being associated with the input source material. Such an association may include, for example, the generation of a caption or portion of text that is embedded (e.g., as metadata) with an input source text or image. In one or more embodiments, an output of a language model may be used to determine the validity of an input source material for further processing, or inclusion in a dataset. For example, a language model may be used to assess the presence (or absence) of a target word in a portion of text or an object in an image, with the text or image being annotated to note such presence (or lack thereof). Alternatively, the determination from the language model may be used to determine whether the source material should be included in a curated dataset, for example and without limitation.

FIG. 9A is a block diagram of an example generative language model system 900 suitable for use in implementing at least some embodiments of the present disclosure. In the example illustrated in FIG. 9A, the generative language model system 900 includes a retrieval augmented generation (RAG) component 992, an input processor 905, a tokenizer 910, an embedding component 920, plug-ins/APIs 995, and a generative language model (LM) 930 (which may include an LLM, a VLM, a multi-modal LM, etc.).

At a high level, the input processor 905 may receive an input 901 comprising text and/or other types of input data (e.g., audio data, video data, image data, sensor data (e.g., LiDAR, RADAR, ultrasonic, etc.), 3D design data, CAD data, universal scene descriptor (USD) data, etc.), depending on the architecture of the generative LM 930. In some embodiments, the input 901 includes plain text in the form of one or more sentences, paragraphs, and/or documents. Additionally or alternatively, the input 901 may include numerical sequences, precomputed embeddings (e.g., word or sentence embeddings), and/or structured data (e.g., in tabular formats, JSON, or XML). In some implementations in which the generative LM 930 is capable of processing multimodal inputs, the input 901 may combine text with image data, audio data, and/or other types of input data, such as but not limited to those described herein. Taking raw input text as an example, the input processor 905 may prepare raw input text in various ways. For example, the input processor 905 may perform various types of text filtering to remove noise (e.g., special characters, punctuation, HTML tags, stopwords) from relevant textual content. In an example involving stopwords (common words that tend to carry little semantic meaning), the input processor 905 may remove stopwords to reduce noise and focus the generative LM 930 on more meaningful content. The input processor 905 may apply text normalization, for example, by converting all characters to lowercase, removing accents, and/or or handling special cases like contractions or abbreviations to ensure consistency. These are just a few examples, and other types of input processing may be applied.

In some embodiments, a RAG component 992 may be used to retrieve additional information to be used as part of the input 901 or prompt. For example, in some embodiments, the input 901 may be generated using the query or input to the model (e.g., a question, a request, etc.) in addition to data retrieved using the RAG component 992. In some embodiments, the input processor 905 may analyze the input 901 and communicate with the RAG component 992 (or the RAG component 992 may be part of the input processor 905, in embodiments) in order to identify relevant text and/or other data to provide to the generative LM 930 as additional context or sources of information from which to identify the response, answer, or output 990, generally. For example, where the input indicates that the user is interested in a desired tire pressure for a particular make and model of vehicle, the RAG component 992 may retrieve - using a vector search in an embedding space, for example - the tire pressure information or the text corresponding thereto from a digital (embedded) version of the user manual for that particular vehicle make and model. Similarly, where a user revisits a chatbot related to a particular product offering or service, the RAG component 992 may retrieve a prior stored conversation history - or at least a summary thereof - and include the prior conversation history along with the current ask/request as part of the input 901 to the generative LM 930.

The tokenizer 910 may segment the (e.g., processed) text into smaller units (tokens) for subsequent analysis and processing. The tokens may represent individual words, subwords, characters, etc., depending on the implementation. Word-based tokenization divides the text into individual words, treating each word as a separate token. Subword tokenization breaks down words into smaller meaningful units (e.g., prefixes, suffixes, stems), enabling the generative LM 930 to understand morphological variations and handle out-of-vocabulary words more effectively. Character-based tokenization represents each character as a separate token, enabling the generative LM 930 to process text at a fine-grained level. The choice of tokenization strategy may depend on factors such as the language being processed, the task at hand, and/or characteristics of the training dataset. As such, the tokenizer 910 may convert the (e.g., processed) text into a structured format according to tokenization schema being implemented in the particular embodiment.

The embedding component 920 may use any known embedding technique to transform discrete tokens into (e.g., dense, continuous vector) representations of semantic meaning. For example, the embedding component 920 may use pre-trained word embeddings (e.g., Word2Vec, GloVe, or FastText), one-hot encoding, Term Frequency-Inverse Document Frequency (TF-IDF) encoding, one or more embedding layers of a neural network, and/or otherwise.

In some implementations in which the input 901 includes image data, the input processor 905 may resize the image data to a standard size compatible with format of a corresponding input channel and/or may normalize pixel values to a common range (e.g., 0 to 1) to ensure a consistent representation, and the embedding component 920 may encode the image data using any known technique (e.g., using one or more convolutional neural networks (CNNs) to extract visual features). In some implementations in which the input 901 includes audio data, the input processor 905 may resample an audio file to a consistent sampling rate for uniform processing, and the embedding component 920 may use any known technique to extract and encode audio features - such as in the form of a spectrogram (e.g., a mel-spectrogram). In some implementations in which the input 901 includes video data, the input processor 905 may extract frames or apply resizing to extracted frames, and the embedding component 920 may extract features such as optical flow embeddings or video embeddings and/or may encode temporal information or sequences of frames. In some implementations in which the input 901 includes multimodal data, the embedding component 920 may fuse representations of the different types of data (e.g., text, image, audio) using techniques like early fusion (concatenation), late fusion (sequential processing), attention-based fusion, etc.

The generative LM 930 and/or other components of the generative language model system 900 may use different types of neural network architectures depending on the implementation. For example, transformer-based architectures such as those used in models like GPT may be implemented, and may include self-attention mechanisms that weigh the importance of different words or tokens in the input sequence and/or feedforward networks that process the output of the self-attention layers, applying non-linear transformations to the input representations and extracting higher-level features. Some non-limiting example architectures include transformers (e.g., encoder-decoder, decoder only, multimodal), RNNs, LSTMs, fusion models, diffusion models, cross-modal embedding models that learn joint embedding spaces, graph neural networks (GNNs), hybrid architectures combining different types of architectures adversarial networks like generative adversarial networks or GANs or adversarial autoencoders (AAEs) for joint distribution learning, and others. As such, depending on the implementation and architecture, the embedding component 920 may apply an encoded representation of the input 901 to the generative LM 930, and the generative LM 930 may process the encoded representation of the input 901 to generate an output 990, which may include responsive text and/or other types of data.

As described herein, in some embodiments, the generative LM 930 may be configured to access or use - or capable of accessing or using - plug-ins/APIs 995 (which may include one or more plug-ins, application programming interfaces (APIs), databases, data stores, repositories, etc.). For example, for certain tasks or operations that the generative LM 930 is not ideally suited for, the model may have instructions (e.g., as a result of training, and/or based on instructions in a given prompt, such as those retrieved using the RAG component 992) to access one or more plug-ins/APIs 995 (e.g., 3^{rd} party plugins) for help in processing the current input. In such an example, where at least part of a prompt is related to restaurants or weather, the model may access one or more restaurant or weather plug-ins (e.g., via one or more APIs), send at least a portion of the prompt related to the particular plug-ins/APIs 995 to the plug-ins/APIs 995, the plug-ins/APIs 995 may process the information and return an answer to the generative LM 930, and the generative LM 930 may use the response to generate the output 990. This process may be repeated - e.g., recursively - for any number of iterations and using any number of plug-ins/APIs 995 until an output 990 that addresses each ask/question/request/process/operation/etc. from the input 901 can be generated. As such, the model(s) may not only rely on its own knowledge from training on a large dataset(s) and/or from data retrieved using the RAG component 992, but also on the expertise or optimized nature of one or more external resources - such as the plug-ins/APIs 995.

FIG. 9B is a block diagram of an example implementation in which the generative LM 930 includes a transformer encoder-decoder. For example, assume input text such as "Who discovered gravity" is tokenized (e.g., by the tokenizer 910 of FIG. 9A) into tokens such as words, and each token is encoded (e.g., by the embedding component 920 of FIG. 9A) into a corresponding embedding (e.g., of size 512). Since these token embeddings typically do not represent the position of the token in the input sequence, any known technique may be used to add a positional encoding to each token embedding to encode the sequential relationships and context of the tokens in the input sequence. As such, the (e.g., resulting) embeddings may be applied to one or more encoder(s) 935 of the generative LM 930.

In an example implementation, the encoder(s) 935 forms an encoder stack, where each encoder includes a self-attention layer and a feedforward network. In an example transformer architecture, each token (e.g., word) flows through a separate path. As such, each encoder may accept a sequence of vectors, passing each vector through the self-attention layer, then the feedforward network, and then upwards to the next encoder in the stack. Any known self-attention technique may be used. For example, to calculate a self-attention score for each token (word), a query vector, a key vector, and a value vector may be created for each token, a self-attention score may be calculated for pairs of tokens by taking the dot product of the query vector with the corresponding key vectors, normalizing the resulting scores, multiplying by corresponding value vectors, and summing weighted value vectors. The encoder may apply multi-headed attention in which the attention mechanism is applied multiple times in parallel with different learned weight matrices. Any number of encoders may be cascaded to generate a context vector encoding the input. An attention projection layer 940 may convert the context vector into attention vectors (keys and values) for the decoder(s) 945.

In an example implementation, the decoder(s) 945 form a decoder stack, where each decoder includes a self-attention layer, an encoder-decoder self-attention layer that uses the attention vectors (keys and values) from the encoder to focus on relevant parts of the input sequence, and a feedforward network. As with the encoder(s) 935, in an example transformer architecture, each token (e.g., word) flows through a separate path in the decoder(s) 945. During a first pass, the decoder(s) 945, a classifier 950, and a generation mechanism 955 may generate a first token, and the generation mechanism 955 may apply the generated token as an input during a second pass. The process may repeat in a loop, successively generating and adding tokens (e.g., words) to the output from the preceding pass and applying the token embeddings of the composite sequence with positional encodings as an input to the decoder(s) 945 during a subsequent pass, sequentially generating one token at a time (known as auto-regression) until predicting a symbol or token that represents the end of the response. Within each decoder, the self-attention layer is typically constrained to attend only to preceding positions in the output sequence by applying a masking technique (e.g., setting future positions to negative infinity) before the softmax operation. In an example implementation, the encoder-decoder attention layer operates similarly to the (e.g., multi-headed) self-attention in the encoder(s) 935, except that it creates its queries from the layer below it and takes the keys and values (e.g., matrix) from the output of the encoder(s) 935.

As such, the decoder(s) 945 may output some decoded (e.g., vector) representation of the input being applied during a particular pass. The classifier 950 may include a multi-class classifier comprising one or more neural network layers that project the decoded (e.g., vector) representation into a corresponding dimensionality (e.g., one dimension for each supported word or token in the output vocabulary) and a softmax operation that converts logits to probabilities. As such, the generation mechanism 955 may select or sample a word or token based on a corresponding predicted probability (e.g., select the word with the highest predicted probability) and append it to the output from a previous pass, generating each word or token sequentially. The generation mechanism 955 may repeat the process, triggering successive decoder inputs and corresponding predictions until selecting or sampling a symbol or token that represents the end of the response, at which point, the generation mechanism 955 may output the generated response.

FIG. 9C is a block diagram of an example implementation in which the generative LM 930 includes a decoder-only transformer architecture. For example, the decoder(s) 960 of FIG. 9C may operate similarly as the decoder(s) 945 of FIG. 9B except each of the decoder(s) 960 of FIG. 9C omits the encoder-decoder self-attention layer (since there is no encoder in this implementation). As such, the decoder(s) 960 may form a decoder stack, where each decoder includes a self-attention layer and a feedforward network. Furthermore, instead of encoding the input sequence, a symbol or token representing the end of the input sequence (or the beginning of the output sequence) may be appended to the input sequence, and the resulting sequence (e.g., corresponding embeddings with positional encodings) may be applied to the decoder(s) 960. As with the decoder(s) 945 of FIG. 9B, each token (e.g., word) may flow through a separate path in the decoder(s) 960, and the decoder(s) 960, a classifier 965, and a generation mechanism 970 may use auto-regression to sequentially generate one token at a time until predicting a symbol or token that represents the end of the response. The classifier 965 and the generation mechanism 970 may operate similarly as the classifier 950 and the generation mechanism 955 of FIG. 9B, with the generation mechanism 970 selecting or sampling each successive output token based on a corresponding predicted probability and appending it to the output from a previous pass, generating each token sequentially until selecting or sampling a symbol or token that represents the end of the response. These and other architectures described herein are meant simply as examples, and other suitable architectures may be implemented within the scope of the present disclosure.

Other variations are within the spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). In at least one embodiment, a number of items in a plurality is at least two but can be more when so indicated either explicitly or by context. Further, unless stated otherwise or otherwise clear from context, the phrase "based on" means "based at least in part on" or "based at least on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in the form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to the same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, in some embodiments, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the term "processor" may refer to any device or portion of a device that processes electronic data from registers and/or memory and transforms that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as a system may embody one or more methods and methods may be considered a system.

In the present document, references may be made to obtaining, acquiring, receiving, or inputting analog or digital data into a subsystem, computer system, or computer-implemented machine. In at least one embodiment, a process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example embodiments of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system comprising a network interface controller (NIC) to:
   generate a first network packet having first metadata, wherein the first metadata indicates a first association with a plurality of parallel processing units for performing distributed artificial intelligence (AI) operations;
   after generating the first network packet, generate a second network packet having second metadata, wherein the second metadata indicates a second association with the plurality of parallel processing units for performing the distributed AI operations;
   determine that the second network packet has a higher priority than the first network packet based on a comparison of the second metadata with the first metadata; and
   provide the second network packet to a networking device before providing the first network packet.
Clause 2. The system of clause 1, wherein the first network packet having the first metadata is generated for an AI kernel executed using a first parallel processing unit of the plurality of parallel processing units.
Clause 3. The system of clause 1, wherein the first association includes one or more target parallel processing units of the plurality of parallel processing units.
Clause 4. The system of clause 1, wherein the first metadata comprises at least one of:
   a first communication collective identifier;
   a data type;
   collective data volume indicator; or
   an operation type.
Clause 5. The system of clause 4, wherein the second metadata comprises a second communication collective identifier, the first communication collective identifier being different than the second communication collective identifier.
Clause 6. The system of clause 1, wherein the networking device is a network switch configured to handle network traffic based on AI-related metadata.
Clause 7. The system of clause 1, wherein the distributed AI operations comprise one or more of:
   broadcast operations;
   all-reduce operations;
   reduce operations;
   all-gather operations;
   gather operations;
   scatter operations;
   reduce-scatter operations; or
   barrier operations.
Clause 8. A network switch comprising:
   a memory; and
   a processing unit, coupled to the memory, to:
      receive a first network packet;
      after receiving the first network packet, receive a second network packet;
      determine a first rule for handling the first network packet based on first metadata of the first network packet and a second rule for handling the second network packet based on second metadata of the second network packet, wherein the first metadata indicates a first association with a plurality of parallel processing units for performing distributed artificial intelligence (AI) operations and the second metadata indicates a second association with the plurality of parallel processing units for performing the distributed AI operations;
      determine that the second network packet has a higher priority than the first network packet based on a comparison of the second metadata with the first metadata; and
      provide the second network packet to a first networking device before providing the first network packet.
Clause 9. The network switch of clause 8, wherein to determine the first rule for handling the first network packet and the second rule for handling the second network packet, the processing unit is to receive one or more control messages comprising the first rule for handling the first network packet and the second rule for handling the second network packet.
Clause 10. The network switch of clause 9, wherein the one or more control messages are generated for an artificial intelligence (AI) kernel executed using a first parallel processing unit of the plurality of parallel processing units.
Clause 11. The network switch of clause 8, wherein to determine the first rule for handling the first network packet and the second rule for handling the second network packet, the processing unit is to:
   send a query to a second networking device; and
   receive from the second networking device, in response to the query, an answer comprising the first rule for handling the first network packet and the second rule for handling the second network packet.
Clause 12. The network switch of clause 11, wherein the answer is generated for an artificial intelligence (AI) kernel executed by a first parallel processing unit of the plurality of parallel processing units.
Clause 13. The network switch of clause 8, wherein the first metadata comprises at least one of:
   a first communication collective identifier;
   a data type;
   collective data volume indicator; or
   an operation type.
Clause 14. The network switch of clause 13, wherein the first metadata comprises a first collective data volume indicator indicating that a number of network packets generated by a first communication collective is less than a first volume threshold, and wherein the processing unit is further to store, in a buffer, the first network packet.
Clause 15. The network switch of clause 8, wherein the first rule for handling the first network packet based on the first metadata associated with the first network packet comprises at least one of:
   a prioritization rule for the first network packet;
   a buffering decision for the first network packet; or
   a network routing rule for the first network packet.
Clause 16. A method comprising:
   receiving a first network packet;
   after receiving the first network packet, receiving a second network packet;
   determining a first rule for handling the first network packet based on first metadata of the first network packet and a second rule for handling the second network packet based on second metadata of the second network packet, wherein the first metadata indicates a first association with a plurality of parallel processing units for performing distributed artificial intelligence (AI) operations and the second metadata indicates a second association with the plurality of parallel processing units for performing the distributed AI operations;
   determining that the second network packet has a higher priority than the first network packet based on a comparison of the second metadata to the first metadata; and
   providing the second network packet to a first networking device before providing the first network packet.
Clause 17. The method of clause 16, wherein determining the first rule for handling the first network packet and the second rule for handling the second network packet comprises receiving one or more control messages comprising the first rule for handling the first network packet and the second rule for handling the second network packet.
Clause 18. The method of clause 17, wherein the one or more control messages are generated for an artificial intelligence (AI) kernel executed using a first parallel processing unit of the plurality of parallel processing units.
Clause 19. The method of clause 16, wherein determining the first rule for handling the first network packet and the second rule for handling the second network packet comprises:
   sending a query to a second networking device; and
   receiving from the second networking device, in response to the query, an answer comprising the first rule for handling the first network packet and the second rule for handling the second network packet.
Clause 20. The method of clause 19, wherein the answer is generated for an artificial intelligence (AI) kernel executed by a first parallel processing unit of the plurality of parallel processing units.

## Claims

1. A system comprising a network interface controller (NIC) to:
generate a first network packet having first metadata, wherein the first metadata indicates a first association with a plurality of parallel processing units for performing distributed artificial intelligence (AI) operations;
after generating the first network packet, generate a second network packet having second metadata, wherein the second metadata indicates a second association with the plurality of parallel processing units for performing the distributed AI operations;
determine that the second network packet has a higher priority than the first network packet based on a comparison of the second metadata with the first metadata; and
provide the second network packet to a networking device before providing the first network packet.

2. The system of claim 1, wherein the first network packet having the first metadata is generated for an AI kernel executed using a first parallel processing unit of the plurality of parallel processing units.

3. The system of claim 1 or 2, wherein the first association includes one or more target parallel processing units of the plurality of parallel processing units.

4. The system of claim 1, 2, or 3, wherein the first metadata comprises at least one of:
a first communication collective identifier;
a data type;
collective data volume indicator; or
an operation type.

5. The system of claim 4, wherein the second metadata comprises a second communication collective identifier, the first communication collective identifier being different than the second communication collective identifier.

6. The system of any of claims 1-5, wherein the networking device is a network switch configured to handle network traffic based on AI-related metadata.

7. The system of any of claims 1-6, wherein the distributed AI operations comprise one or more of:
broadcast operations;
all-reduce operations;
reduce operations;
all-gather operations;
gather operations;
scatter operations;
reduce-scatter operations; or
barrier operations.

8. A network switch comprising:
a memory; and
a processing unit, coupled to the memory, to:
receive a first network packet;
after receiving the first network packet, receive a second network packet;
determine a first rule for handling the first network packet based on first metadata of the first network packet and a second rule for handling the second network packet based on second metadata of the second network packet, wherein the first metadata indicates a first association with a plurality of parallel processing units for performing distributed artificial intelligence (AI) operations and the second metadata indicates a second association with the plurality of parallel processing units for performing the distributed AI operations;
determine that the second network packet has a higher priority than the first network packet based on a comparison of the second metadata with the first metadata; and
provide the second network packet to a first networking device before providing the first network packet.

9. The network switch of claim 8, wherein to determine the first rule for handling the first network packet and the second rule for handling the second network packet, the processing unit is to receive one or more control messages comprising the first rule for handling the first network packet and the second rule for handling the second network packet.

10. The network switch of claim 9, wherein the one or more control messages are generated for an artificial intelligence (AI) kernel executed using a first parallel processing unit of the plurality of parallel processing units.

11. The network switch of claim 8, 9, or 10, wherein to determine the first rule for handling the first network packet and the second rule for handling the second network packet, the processing unit is to:
send a query to a second networking device; and
receive from the second networking device, in response to the query, an answer comprising the first rule for handling the first network packet and the second rule for handling the second network packet, wherein the answer is generated for an artificial intelligence (AI) kernel executed by a first parallel processing unit of the plurality of parallel processing units.

12. The network switch of any of claims 8-11, wherein the first metadata comprises at least one of:
a first communication collective identifier;
a data type;
collective data volume indicator; or
an operation type.

13. The network switch of claim 12, wherein the first metadata comprises a first collective data volume indicator indicating that a number of network packets generated by a first communication collective is less than a first volume threshold, and wherein the processing unit is further to store, in a buffer, the first network packet.

14. The network switch of any of claims 8-13, wherein the first rule for handling the first network packet based on the first metadata associated with the first network packet comprises at least one of:
a prioritization rule for the first network packet;
a buffering decision for the first network packet; or
a network routing rule for the first network packet.

15. A method comprising:
receiving a first network packet;
after receiving the first network packet, receiving a second network packet;
determining a first rule for handling the first network packet based on first metadata of the first network packet and a second rule for handling the second network packet based on second metadata of the second network packet, wherein the first metadata indicates a first association with a plurality of parallel processing units for performing distributed artificial intelligence (AI) operations and the second metadata indicates a second association with the plurality of parallel processing units for performing the distributed AI operations;
determining that the second network packet has a higher priority than the first network packet based on a comparison of the second metadata to the first metadata; and
providing the second network packet to a first networking device before providing the first network packet.
